# EUROPÄISCHE PATENTSCHRIFT

(11) **EP 2 581 379 B1**
(45) Veröffentlichungstag und Bekanntmachung des Hinweises auf die Patenterteilung: **18.05.2016**
(21) Anmeldenummer: 12006228.6
(22) Anmeldetag: 03.09.2012
(51) Int. Cl.: C07F 9/6571, C09K 21/12, C08F 8/40

(54) **HALOGENFREIES, PHOSPHORHALTIGES FLAMMSCHUTZMITTEL**
HALOGEN-FREE MATERIAL CONTAINING PHOSPHOROUS
PRODUIT IGNIFUGE CONTENANT DU PHOSPHORE SANS HALOGÈNE

(30) Priorität: 14.10.2011 DE 102011116178
(43) Veröffentlichungstag der Anmeldung: 17.04.2013
(73) Patentinhaber: Schill + Seilacher "Struktol" GmbH, 22113 Hamburg (DE)
(72) Erfinder: Berthold, Just, Dr., 22397 Hamburg (DE); Keller, Holger, Dr., 21391 Reppenstedt (DE); Imeri, Seljam, 22117 Hamburg (DE)
(74) Vertreter: Prinz & Partner mbB

(56) Entgegenhaltungen:
- EP-A1- 2 284 208
- JP-A- 2011 153 193
- US-A1- 2008 227 884
- US-A1- 2010 048 766
- LEVCHIK S ET AL: "New developments in flame retardancy of epoxy resins", POLYMER DEGRADATION AND STABILITY, BARKING, GB, Bd. 88, Nr. 1, 6. November 2004 (2004-11-06), Seiten 57-62, XP004758050, ISSN: 0141-3910, DOI: 10.1016/J.POLYMDEGRADSTAB.2004.02.019

## Beschreibung

Die Erfindung betrifft ein halogenfreies phosphorhaltiges Flammschutzmittel, ein Verfahren zu dessen Herstellung sowie die Verwendung des Flammschutzmittels zur flammfesten Ausrüstung von thermoplastischen und duroplastischen Formmassen und daraus hergestellte Formkörper, einschließlich Folien, Filmen, Fasern, Fäden, Laminaten und Beschichtungen.

Die für viele Verwendungszwecke vorgeschriebene Flammfestmachung von Polymeren wurde ursprünglich durch Einarbeitung von herkömmlichen Flammschutzmitteln wie zum Beispiel Antimontrioxid (Sb₂O₃) oder hochbromierten bzw. hochchlorierten organischen Verbindungen in die Polymere erreicht. Beispiele für solche hochbromierten bzw. hochchlorierten organischen Verbindungen sind Tetrabromphthalsäure, Dibromneopentylglykol und 1,4,5,6,7,7-Hexachlor-5-norbornen-2,3-dicarbonsäure, die auch als HET-Säure oder Chlorendic acid bezeichnet wird. Daneben werden auch Addukte aus Acryl- bzw. Methacrylsäure und dem Diglycidylether von Tetrabrombisphenol A verwendet. Abgesehen von toxikologischen Risiken führt die Verwendung solcher traditioneller Flammschutzmittel zu einer dramatischen Änderung der mechanischen und physikalischen Eigenschaften der damit ausgerüsteten Polymere.

Es ist deshalb schon lange bekannt, halogenfreie Flammschutzmittel wie Aluminiumtrihydroxid, Magnesiumhydroxid, Ammoniumpolyphosphat, verkapselten roten Phosphor und das sowohl Phosphor als auch Stickstoff enthaltende Melaminpolyphosphat zu verwenden. Diese müssen jedoch oft in Kombination mit Blähgraphit als Synergisten eingesetzt werden. Nachteilig an den genannten halogenfreien additiven Flammschutzmitteln ist auch, dass sie hochschmelzende Feststoffe sind, die weder in ausreichendem Maße in den Polymeren gelöst noch eingemischt werden können.

Aus der EP 0 806 429 A2 sind flammfeste Epoxidharze und PhosphinsäureDerivate als halogenfreie Flammschutzmittel für Epoxidharze bekannt. Auch ist daraus die Verwendung der flammfest ausgerüsteten Epoxidharze zur Herstellung von Prepregs und Verbundwerkstoffen, von Fasern, Vliesen und Geweben sowie von Leiterplatten bekannt. Ein bevorzugtes und für diese Zwecke bekanntes Phosphinsäurederivat ist 9,10-Dihydro-9-oxa-10-phospha-phenanthren-10-oxid (DOPO).

Die Umsetzung von DOPO mit ungesättigten Mono- und Dicarbonsäuren, Anhydriden und Estern ungesättigter Carbonsäuren zur Herstellung reaktiver Flammschutzmittel, die während des Polymerisationsprozesses von Polyestern in die Polymerkette eingebaut werden können, sind aus DE 26 46 218 A1 bekannt.

Die Addition von polyfunktionellen Aldehyden und Ketonen an DOPO und andere Phosphinsäurederivate zur Herstellung von Härtern für Epoxidharze ist bekannt aus WO 2007/118507 A1.

Die WO 2004/113355 A1 beschreibt die Addition von DOPO an reaktive Gruppen tragende Acetylene in Gegenwart eines Katalysators, wie Quecksilberund Kupfersalzen oder Aluminiumtriisopropylat.

Die US 2008/227884 A1 offenbart ein Flammschutzmittel, welches durch eine erste Umsetzung von 9,10-Dihydro-9-oxa-10phospha-phenanthren-10-oxid (DOPO) mit 4-Penten-1-ol und Azoisobutyronitril gefolgt von einer zweiten Umsetzung mit Acryloylchlorid erhalten wird. Das so erhaltene Flammschutzmittel wird zusammen mit zwei Acrylaten mittels eines Photoinitiators polymerisiert.

Die bekannten Flammschutzmittel auf der Grundlage von DOPO und anderen Phosphinsäurederivaten eignen sich insbesondere zur Verwendung mit Polyestern, Epoxiden und anderen polaren Kunstharzen. Mit unpolaren Thermoplasten oder Duroplasten sind die Flammschutzmittel dagegen nur schlecht mischbar und es kann eine Trübung oder Phasenseparation auftreten. Die schlechte Mischbarkeit der Komponenten kann außerdem zu einer Verschlechterung der gewünschten physikalischen und chemischen Eigenschaften führen.

Der Erfindung liegt die Aufgabe zugrunde, die Nachteile der beschriebenen Flammschutzmittel zu vermeiden und insbesondere weitere Alternativen für eine Flammfestmachung von unpolaren Thermoplasten und Duroplasten bereitzustellen.

Diese Aufgabe wird erfindungsgemäß durch ein halogenfreies, phosphorhaltiges Flammschutzmittel gelöst, das durch Umsetzen eines Phosphinsäurederivats aus der Gruppe von 9,10-Dihydro-9-oxa-10-phosphaphenanthren-10-oxid (DOPO) und kernsubstituierten DOPO-Derivaten mit einem wahlweise substituierten Polydien erhältlich ist, das isolierte C-C-Doppelbindungen enthält. Die Umsetzung erfolgt in Gegenwart eines Peroxids unter Addition des Phosphinsäurederivats an eine oder mehrere der isolierten C-C-Doppelbindungen.

Vorteilhafte Ausführungsformen der Erfindung sind in den Unteransprüchen angegeben, die wahlweise miteinander kombiniert werden können.

Im Vergleich zu den bisher bekannten, auf der Umsetzung von DOPO mit Polyestern beruhenden Flammschutzmitteln weist das erfindungsgemäße Flammschutzmittel keine hydrolyseempfindlichen Esterbindungen im Polymergrundgerüst und keine oder nur einen geringen Anteil an polaren funktionellen Gruppen auf. Die Löslichkeit in den üblichen industriellen Lösungsmitteln, Reaktiwerdünnern und/oder Monomergemischen ist zufriedenstellend. Insbesondere mit unpolaren thermoplastischen und duroplastischen Polymeren bildet das erfindungsgemäße Flammschutzmittel homogene und transparente Zusammensetzungen, die leicht zu verarbeiten sind und sich nicht entmischen. Der Phosphorgehalt des erfindungsgemäßen Flammschutzmittels ist so hoch, dass für einen wirksamen Flammschutz nur geringe Mengen des Flammschutzmittels eingesetzt werden müssen. Die Herstellung des erfindungsgemäßen Flammschutzmittels lässt sich außerdem so steuern, dass noch reaktive Kohlenstoff-Kohlenstoff-Doppelbindungen vorhanden sind, mit denen eine sichere und dauerhafte Anbindung an die Polymermatrix erfolgen kann.

Die mit dem erfindungsgemäßen Flammschutzmittel flammhemmend ausgerüsteten Polymere und Elastomere erfüllen im allgemeinen die Brandschutznorm UL 94 V-0 der Underwriters' Laboratories (USA).

Die der Erfindung zugrunde liegende Aufgabe wird ferner durch ein Verfahren zur Herstellung des halogenfreien, phosphorhaltigen Flammschutzmittels gelöst, bei dem ein Phosphinsäurederivat aus der Gruppe von 9,10-Dihydro-9-oxa-10-phospha-phenanthren-10-oxid (DOPO) und kernsubstituierten DOPO-Derivaten mit einem wahlweise substituierten Polydien umgesetzt wird, das isolierte C-C-Doppelbindungen enthält, wobei die Umsetzung in Gegenwart eines Peroxids unter Addition des Phosphinsäurederivats an eine oder mehrere der isolierten C-C-Doppelbindungen erfolgt.

Das zur Herstellung des erfindungsgemäßen Flammschutzmittels verwendete Phosphinsäurederivat entspricht bevorzugt einer halogenfreien Verbindung der folgenden allgemeinen Formel (I): 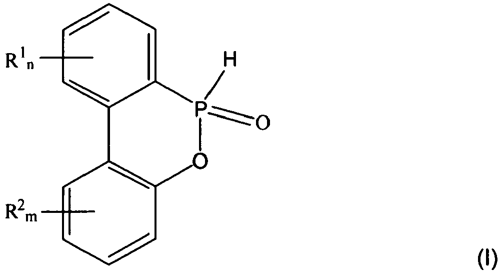 worin R¹ und R² gleich oder verschieden sind und jeweils unabhängig voneinander Alkyl, Alkoxy, Aryl, Aryloxy oder Aralkyl bedeuten, und n und m ganze Zahlen von 0 bis 4 sind. Bevorzugt sind R¹ und R² jeweils C₁₋₈₋Alkyl oder C₁₋₈-Alkoxy, und n und m sind 0 oder 1. Ganz besonders bevorzugt ist unsubstituiertes DOPO mit n=0 und m=0.

Bevorzugte Polydiene zur Umsetzung mit dem Phosphinsäurederivat sind wahlweise substituierte, jedoch halogenfreie, Homopolymere und Copolymere von Dienen, insbesondere Butadien, Isopren, Octadien und 1,4-Hexadien, und wahlweise anderen olefinisch ungesättigten Monomeren, wie Styrol, Acrylnitril, Ethylen und Propylen. Besonders bevorzugt ist das Polydien aus der aus Polybutadien, Polyisopren, Naturkautschuk, Styrol-Butadien-Copolymer, Acrylnitril-Butadien-Copolymer und Etyhlen-Propylen-Dien-Terpolymer und deren Mischungen bestehenden Gruppe ausgewählt.

Ganz besonders bevorzugt ist das Polydien ein wahlweise substituiertes Polybutadien, insbesondere ein mit reaktiven Endgruppen wie Hydroxy-Endgruppen oder Karbonsäure-Endgruppen substituiertes Polybutadien. Diese Polydiene sind als Grundchemikalien zur Kautschukherstellung leicht und kostengünstig verfügbar. Mit den reaktiven Endgruppen kann das Flammschutzmittel außerdem in die Polymermatrix des flammgeschützten Formkörpers eingebunden werden.

In der Seitenkette des Polymergrundgerüsts kann das Polydien ferner Substituenten aus der Gruppe Alkyl, Alkoxy, Aryl, Aryloxy oder Aralkyl, insbesondere C₁₋₈₋Alkyl oder C₁₋₈-Alkoxy, tragen.

Gemäß einer bevorzugten Ausführungsform weist das Polydien ein mittleres Molekulargewicht Mₙ von 800 bis 10.000 g/mol, vorzugsweise von 1.000 bis etwa 5.000 g/mol, auf. Falls das Molekulargewicht des Polydiens unterhalb von etwa 1.000 g/mol liegt, kann das daraus hergestellte Flammschutzmittel zum Auswandern aus der Polymermatrix neigen, falls keine reaktive Anbindung an die Polymermatrix erfolgt. Flammschutzmittel aus Polydienen mit einem Molekulargewicht oberhalb von 10.000 g/mol lassen sich wegen ihrer hohen Schmelzviskosität nur schlecht verarbeiten und neigen zur Eigenpolymerisation.

Bevorzugt weist das Polydien eine Jodzahl von mindestens 10 g Jod/100 g, bevorzugt eine Jodzahl im Bereich von 20 bis etwa 300 g Jod/100 g auf. Ein durch eine niedrige Jodzahl angezeigter niedriger Doppelbindungsanteil im Polydien kann zu einem unzureichendem Phosphoranteil im Flammschutzmittel führen.

Gemäß einer weiteren Ausführungsform umfasst das Polydien ein wahlweise substituiertes Polybutadien mit einem Anteil an 1,2-Vinyl-Doppelbindungen von 20 bis 80 mol %, bezogen auf den Anteil an Polybutadiengrundeinheiten. Ein ausreichend hoher Anteil an 1,2-Vinyl-Doppelbindungen ergibt eine gute Ausbeute bei der Umsetzung des Polybutadiens mit DOPO.

Gemäß einer weiteren bevorzugten Ausführungsform werden die isolierten C-C-Doppelbindungen des Polydiens im Wesentlichen vollständig mit dem Phosphinsäurederivat umgesetzt. Eine im Wesentlichen vollständige Umsetzung der isolierten Doppelbindungen gewährleistet einen hohen Phosphorgehalt des Flammschutzmittels.

Gemäß einer alternativen Ausführungsform wird nur ein Teil der Doppelbindungen des Polydiens mit DOPO umgesetzt. Falls nach der Umsetzung mit dem Phosphinderivat noch reaktive C-C-Doppelbindungen in der Polymerkette vorhanden sind, kann über diese Doppelbindungen eine zusätzliche Vernetzung und eine Anbindung an die Polymermatrix des thermoplastischen oder duroplastischen Formkörpers erfolgen. Bei Thermoplasten kann die Eigenvernetzung zu einem Molmassenaufbau führen und im Brandfall ein Abtropfen des Polymers reduzieren. Der Anteil der nicht umgesetzten Doppelbindungen im Flammschutzmittel kann mit Bezug auf den jeweiligen Anwendungsfall festgelegt werden.

Das Flammschutzmittel weist, je nach Molekulargewicht des eingesetzten Polydiens, vorzugsweise einen Phosphorgehalt von bis zu 11 Gew.-% auf, bevorzugt einen Phosphorgehalt von zwischen 2 und 11 Gew.-%. Damit ist der Phosphorgehalt ausreichend hoch, um auch durch Zusatz geringer Mengen des Flammschutzmittels zu thermoplastischen und/oder duroplastischen Formmassen einen sicheren Flammschutz zu gewährleisten.

Die Umsetzung des Phosphinsäurederivats und des Polydiens erfolgt vorzugsweise bei einer Temperatur zwischen 130 und 160°C, wobei die aus der Umsetzung entstehende Reaktionswärme abgeführt wird, um eine Polymerisation des Reaktionsgemischs zu vermeiden.

Die Umsetzung kann in Gegenwart eines hochsiedenden Lösungsmittels wie Testbenzin durchgeführt werden. Bevorzugt wird das Phosphinsäurederivat jedoch ohne Lösungsmittelzusatz mit dem Polydien umgesetzt.

Das zur Umsetzung des Phosphinsäurederivats mit dem Polydien verwendete Peroxid kann ein anorganisches oder organisches Peroxid sein, das üblicherweise zur radikalischen Polymerisation von Olefinen verwendet wird. Bevorzugt ist das Peroxid aus der aus Wasserstoffperoxid, Perameisensäure, Peressigsäure, Benzoylperoxid, Di-tert-butylperoxid, Dicumylperoxid, Decanoylperoxid, Laurylperoxid, Cumol-hydroperoxid, Pinenhydroperoxid, p-Menthanhydroperoxid, tert-Butylhydro-peroxid, Acetylacetonperoxid, Methylethylketonperoxid, Bernsteinsäureperoxid, Dicetyl-peroxydicarbonat, tert-Butylperoxyacetat, tert-Butylperoxymaleinsäure, tert-Butyl-peroxybenzoat und Acetylcyclohexylsulfonylperoxid bestehenden Gruppe ausgewählt.

Besonders bevorzugt sind Di-tert-butylperoxid und Dicumylperoxid.

Zur Umsetzung des Reaktionsgemischs wird bevorzugt das Phosphinsäurederivat zusammen mit dem Polydien vorgelegt, auf die gewünschte Reaktionstemperatur erwärmt und dann die Reaktion durch Zugabe des Peroxids gestartet. Die Zugabe des Peroxids kann in einem Schritt, wahlweise auch in mehreren Schritten erfolgen.

Das durch die Umsetzung erhaltene Reaktionsprodukt kann ohne weitere Aufarbeitung als Flammschutzmittel eingesetzt werden.

Gegenstand der Erfindung ist ferner die Verwendung des oben beschriebenen phosphorhaltigen Flammschutzmittels zur flammhemmenden Ausrüstung von thermoplastischen und duroplastischen Formmassen und daraus hergestellten Formkörpern.

Ferner umfasst die Erfindung das phosphorhaltige Flammschutzmittel enthaltende polymerisierbare Zusammensetzungen zur Herstellung thermoplastischer Formmassen sowie härtbare Zusammensetzungen, und die daraus hergestellten Formmassen und Formkörper, einschließlich Folien, Filme, Fäden, Fasern, Laminaten und Beschichtungen.

Beispiele für polymerisierbare Zusammensetzungen sind insbesondere die zur Herstellung thermoplastischer Formmassen und Formkörper verwendeten Zusammensetzungen mit Monomeren und/oder Comonomeren, die reaktive Doppelbindungen enthalten.

Geeignete Monomere und Comonomere sind Methylacrylat, 1,2-Butadien, 1,3-Butadien, 2-Ethylhexylacrylat, Acrylamid, Acrylnitril, Acrylsäure, Ethylacrylat, Ethylmethacrylat, Laurylacrylat und/oder Methylmethacrylat, Methacrylamid, Methacrylnitril, Methacrylsäure, n-Butylacrylat, i-Butylacrylat sec-Butylacrylat n-Butylmethacrylat, i-Butylmethacrylat, n-Hexylacrylat, n-Hexylmethacrylat, n-Propylacrylat, tert-Butylacrylat, tert-Butylmethacrylat, Vinylacetat, Vinylpropionat, Octyl(meth)acrylat, Isooctyl(meth)acrylat, Decyl(meth)acrylat, Dodecyl(meth)acrylat, Itaconsäure, Maleinsäure, Cyanoalkyl(meth)acrylat, substituierte Acrylamide wie N,N'-Dimethylacrylamid, N-Vinylpyrrolidon, N-Vinylcaprolactam, und N-Vinylpiperidin, Tricyclodecyl(meth)acrylat, Isobornyl(meth)acrylate, Hydroxy(meth)acrylat, Diallylphthalat, Styrol, p-Methylstyrol, Vinyltoluol, und alpha-Methylstyrol, sowie Mischungen davon.

Weitere Bespiele für thermoplastische Formkörper und Formmassen sind Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt wird das erfindungsgemäße Flammschutzmittel zur Ausrüstung von unpolaren oder wenig polaren thermoplastischen Formkörpern und Formassen verwendet, insbesondere für Formassen und Formkörper aus Copolymeren von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/ Kohlenstoffmonoxid-Copolymere und deren Mischungen mit anderen Polymeren wie z.B. Polyamiden.

Darüber hinaus kann die polymerisierbare Zusammensetzung noch Additive nach dem Stand der Technik enthalten, beispielsweise Weichmacher, Füllstoffe, Hitzestabilisatoren, Schlagzähigkeitsmodifikatoren, Prozesshilfsmittel, Gleitmittel, Lichtschutzmittel, Pigmente, Flammschutzsynergisten und Verstärkungsmittel.

Die polymerisierbare Zusammensetzung zur Herstellung einer thermoplastischen Formmasse enthält das erfindungsgemäße Flammschutzmittel vorzugsweise in einem Anteil von zwischen etwa 10 bis 40 Gew.-%, bezogen auf die Gesamtmasse der polymerisierbaren Komponenten der Zusammensetzung mit Flammschutzmittel, jedoch ohne Additive. Die olefinisch ungesättigten Monomere und/oder Comonomere liegen vorzugsweise in einem Anteil von zwischen etwa 60 Gew.-% bis 90 Gew.-% vor.

Ein Verfahren zur Herstellung der flammhemmend ausgerüsteten thermoplastischen Formmassen besteht darin, dass das erfindungsgemäße Flammschutzmittel gemeinsam mit weiteren Comonomeren zu flammgeschützten Polymeren umgesetzt oder mit Polymeren nach dem Stand der Technik durch Extrudieren, Compoundieren etc. gemischt wird.

Die mit dem erfindungsgemäßen Flammschutzmittel ausgerüsteten Formmassen können dann durch Spritzgießen und Pressen, Schaumspritzgießen, Schmelzspinnen, Blasformen, Foliengießen, Kalandern, Laminieren oder Beschichten zu flammgeschützten Formkörpern, einschließlich Platten, Folien, Filme, Fäden, Fasern, Laminaten und Beschichtungen, weiter verarbeitet werden.

Darüber hinaus kann das erfindungsgemäße phosphorhaltige Flammschutzmittel auch in härtbaren Zusammensetzungen für duroplastische Formmassen und der daraus durch Vernetzen hergestellten Formkörper verwendet werden. Geeignete duroplastische Formmassen sind ungesättigte Polyesterharze (UP-Harze), Epoxidharze, Polyurethane und Acrylate. Bevorzugt sind insbesondere UP-Harze und Epoxidharze.

Gemäß einer bevorzugten Ausführungsform wird das erfindungsgemäße Flammschutzmittel in einer härtbaren Zusammensetzung mit einem ungesättigten Polyesterharz (UP-Harz) sowie einem Comonomer und gegebenenfalls weiteren Zuschlägen eingesetzt.

Das ungesättigte Polyesterharz ist vorzugsweise ein Polykondensationsprodukt einer gesättigten und/oder ungesättigten Dicarbonsäure und/oder deren Anhydride und eines zwei- oder mehrwertigen Alkohols. Die Dicarbonsäure ist vorzugsweise aus der aus Maleinsäure, Fumarsäure, Itaconsäure, Mesaconsäure, Citraconsäure, Adipinsäure, Azelainsäure, Sebacinsäure, Phthalsäure, Isophthalsäure, Terephthalsäure und Tetrahydrophthalsäure bestehenden Gruppe ausgewählt. Maleinsäure bzw. Maleinsäureanhydrid sind jedoch besonders bevorzugt.

Der zweiwertige Alkohol ist vorzugsweise aus der Gruppe ausgewählt, die aus 1,2-Propandiol, 1,3-Propandiol, 1,3-Butandiol, 1,4-Butandiol, Ethylenglykol, Neopentylglykol, Diethylenglykol, Dipropylenglykol, ethoxyliertem oder propoxyliertem Bisphenol A und Tricyclodecandimethanol besteht. Besonders bevorzugt handelt es sich bei den zweiwertigen Alkoholen um Propylenglykol und Ethylenglykol. Als mehrwertiger Alkohol wird vorzugsweise Tris-2-hydroxyethylisocyanurat (THEIC) verwendet

Das Comonomer in der UP-Harzzusammensetzung ist bevorzugt Styrol oder ein (Meth)acrylat, wie z.B. Methyl(meth)acrylat. Beispiele für weitere Comonomere sind Methylstyrol, Vinyltoluol, Hexandiolacrylat, Triallylcyanurat, Diallylphthalat und mehrwertige Acrylsäureester. Das ungesättigte Polyesterharz wird üblicherweise in einem Anteil von 60 bis 90 Gew.-% in dem Comonomer gelöst. Dieses dient nicht nur als Reaktiwerdünner sondern auch zur Copolymerisation des ungesättigten Polyesterharzes und des erfindungsgemäßen Flammschutzmittels, wodurch nach dem Härten dreidimensional vernetzte, feste, unschmelzbare und unlösliche Harze entstehen, in die das Flammschutzmittel fest eingebunden ist.

Als Härter eignen sich insbesondere organische Peroxide, C-C-labile Initiatoren sowie Photoinitiatoren.

Besonders bevorzugt weist das in die UP-Harzformulierung eingebrachte Flammschutzmittel noch einen Anteil an ungesättigten Kohlenstoff-Kohlenstoff-Doppelbindungen auf. Diese Doppelbindungen können mit den ungesättigten Gruppen in der UP-Harzzusammensetzung vernetzt werden, so daß ein dreidimensionales Netzwerk mit fest in der Harzmatrix verankertem Flammschutzmittel entsteht.

Die UP-Harzzusammensetzung kann als Zuschlag ferner Glasfasern oder Kunstfasern wie Aramidfasern oder Kohlefasern zur Verstärkung der gehärteten Polyesterharzzusammensetzung enthalten. Zudem kann die erfindungsgemäße Polyesterzusammensetzung gegebenenfalls mit Weichmachern, Füllstoffen oder Pigmenten modifiziert sein.

Die ungesättigten Polyesterharze werden üblicherweise bei Raumtemperatur oder höheren Temperaturen vernetzt. Vorzugsweise ist die Polyesterharzzusammensetzung durch Erwärmen auf eine Temperatur im Bereich von 100 bis 180°C härtbar, wobei der radikalisch initiierte thermische Härtungsprozess durch ionische und aktinische Härtungskomponenten unterstützt werden kann.

Gemäß einer weiteren Ausführungsform kann das erfindungsgemäße Flammschutzmittel auch zur flammhemmenden Ausrüstung von härtbaren Epoxidharzen verwendet werden.

Das härtbare Epoxidharz ist vorzugsweise aus der Gruppe der Epoxynovolake und Glycidylether von Bisphenolen und aliphatischen Polyolen ausgewählt. Besonders bevorzugt sind Epoxidharze auf der Grundlage des Diglycidylethers von Bisphenol A (DGEBA).

Das Epoxidharz kann darüber hinaus auch die üblicherweise verwendeten Härtungsmittel enthalten, wie beispielsweise Polycarbonsäuren und deren Anhydride, Amine, Polyamine, Polyaminoamide, aminogruppenhaltige Addukte, Guanidine, Cyanguanidine, aliphatische oder aromatische Polyole oder katalytisch wirkende Härtungsmittel. Vorzugsweise ist das Härtungsmittel Dicyandiamid, ein Amin oder ein Aminderivat.

Darüber hinaus können die Epoxidharzformulierungen auch Beschleuniger für die Vernetzungsreaktion mit dem Härter enthalten. Geeignete Beschleuniger sind die im Stand der Technik bekannten Harnstoffderivate, Imidazole und tertiären Amine sowie deren Salze.

Schließlich können die Epoxidharzformulierungen auch die üblichen anorganischen und organischen Füllstoffe, Modifikatoren und Verstärkungsmaterialien enthalten. Bekannte Füllstoffe sind mineralische und faserförmige Füllstoffe wie Quarzmehl, Aluminiumoxyd, Glaspulver, Glimmer, Kaolin, Dolomit, Graphit, Ruß sowie Kohlefasern und Textilfasern. Als Verstärkungsmaterialien eignen sich insbesondere Glasfasern, Kohlenstofffasern und Kunststofffasern. Bekannte Modifikatoren sind Silikone und Kautschuk.

Die Härtung der Epoxidharze erfolgt üblicherweise in einem Temperaturbereich zwischen Raumtemperatur und 200°C unter Bildung eines gehärteten duroplastischen Formkörpers.

Die duroplastischen Formmassen und Formkörper enthalten das erfindungsgemäße Flammschutzmittel vorzugsweise in einem Anteil von zwischen etwa 10 und 40 Gew.-%, bezogen auf die Gesamtmasse des duroplastischen Polymers mit Härter und Flammschutzmittel, jedoch ohne weitere Additive. Der Anteil des duroplastischen Polymers beträgt vorzugsweise zwischen etwa 60 und 90 Gew.-%.

Das flammfest ausgerüstete duroplastische Polymer kann ohne jede Beschränkung zur Herstellung der üblichen duroplastischen Formkörper verwendet werden, insbesondere zur Herstellung von Laminaten und Beschichtungen sowie Platten und Bauteilen für den Fahrzeugbau, Luftfahrtbau sowie anderen Gegenständen auf dem Gebiet der Elektronik, bei denen es auf einen wirksamen Flammschutz besonders ankommt.

Der Gesamtphosphorgehalt der thermoplastischen und duroplastischen Formkörper und Formmassen liegt bevorzugt zwischen etwa 1,0 und 3 Gew.-%, bezogen auf den Anteil des Flammschutzmittels und des Polymers, ohne weitere Additive.

### AUSFÜHRUNGSBEISPIELE

Weitere Vorteile der Erfindung ergeben sich aus der nachfolgenden Beschreibung bevorzugter Ausführungsformen, die jedoch nicht in einem einschränkenden Sinn verstanden werden sollen.

Verwendete Chemikalien und Abkürzungen
- Poly bd® R 20 LM:
   Polybutadien-Harz mit Hydroxyl-Endgruppen (Mₙ: 1200 g/mol); Hersteller Sartomer;
- Krasol® LBH 3000:
   Polybutadien-Harz mit Hydroxyl-Endgruppen (Mₙ: 3000 g/mol); Hersteller Sartomer;
- RICON® 150:
   Polybutadien-Polymer (CAS-Nr. 9003-17-2; Mₙ: 3900 g/mol); Hersteller Cray Valley;
- STRUKTOL POLYDIS™ 3710:
   DOPO; Hersteller Schill + Seilacher "Struktol" GmbH
- Di-tert-Butylperoxid:
   Radikalbildner

### Beispiel 1

Zur Herstellung eines halogenfreien, phosphorhaltigen Flammschutzmittels wurden zunächst 75 g Poly bd® R 20 LM und 73,5 g STRUKTOL POLYDIS™ 3710 in einen Planflanschkolben eingewogen und auf 140 °C erwärmt. Anschließend wurden 1,5 g Di-tert-Butylperoxid zugegeben, wodurch die Reaktionstemperatur auf 145 °C anstieg. Die Reaktionsmischung wurde 4 h lang auf dieser Temperatur gehalten. Während der Reaktionsdauer wurde der DOPO-Gehalt im Reaktionsgemisch titrimetrisch bestimmt.

Nach einer Reaktionszeit von insgesamt 4 h wurde ein helles Produkt erhalten. Der Erweichungspunkt des Reaktionsprodukts lag bei 90 °C. Der Gehalt an freiem, nicht umgesetzen DOPO betrug 0,5 %. Der Phosphorgehalt lag bei 7 Gew.-%.

### Beispiel 2

Zur Herstellung eines weiteren Flammschutzmittels wurden 65 g Krasol LBH 3000 zusammen mit 34 g STRUKTOL POYLDIS™ 3710 in einen Planflanschkolben vorgelegt und bei 150 °C homogenisiert. Anschließend wurde 1 g Di-tert-Butylperoxid zugegeben, wodurch die Reaktionstemperatur auf 160 °C anstieg. Die Reaktionsmischung wurde auf 150 °C abgekühlt und 4 h lang bei dieser Temperatur gerührt.

Die Reaktion ergab ein weißes Produkt mit einem Erweichungspunkt von 105 °C. Der Gehalt an freiem, nicht umgesetzen DOPO betrug 1%. Der Phosphorgehalt lag bei 5 Gew.-%.

### Beispiel 3

300 g des Reaktionsproduktes aus Beispiel 1 wurden mit 500 g eines flüssigen Bisphenol A Diglycidylethers (Araldite™ GY 250 der Firma Huntsman), 30 g Dicyandiamid (Dyhard™ 100 SF der Firma Evonik) und 10 g Beschleuniger Urone™ 300 (Hersteller: Evonik) bei 100 °C gemischt und 30 min bei 180 °C ausgehärtet. Das so erhaltene ausgehärtete Epoxidharz hat einen Phosphorgehalt von 2,5 %.

### Beispiel 4

250 g des Reaktionsproduktes aus Beispiel 2 wurden mit 250 g eines Epoxynovolakharzes D.E.N™ 438 (Hersteller: Dow Chemicals), 15 g Dicyandiamid (Dyhard™ SF 100, Hersteller: Evonik) und 5 g Beschleuniger Urone™ 300 (Hersteller: Evonik) bei 120 °C gemischt und 30 min bei 180 °C gehärtet. Das so erhaltene ausgehärtete Epoxidharz hatte einen Phosphorgehalt von 2,4 %.

Aus den gehärteten Epoxidharzen gemäß den Beispielen 3 und 4 wurden Prüfkörper nach DIN EN 60695-11-10 hergestellt und gemäß dem Underwriter's Laboratories Standard UL 94 V-2-V-0 (Vertical Burning Test) geprüft. Bei dieser Prüfung werden die vertikal eingespannten Prüfkörper während 10 Sekunden am unteren Ende des Prüfkörpers beflammt. Nach Verlöschen der Flamme wird der Vorgang für weitere 10 Sekunden wiederholt. Dies wird an fünf Prüfkörpern durchgeführt. Die Brenn- und Glühzeiten werden notiert sowie die Summe daraus gebildet. Weiterhin wird festgehalten, ob vom Prüfkörper Tropfen abfallen und sich dabei Watte unterhalb des Prüfkörpers entzündet. Die Einstufungen nach UL 94 V reichen von V-2 bis zur besten Klasse V-0. Für die Einstufung nach V-0 oder V-1 darf die Watte nicht durch glühende oder brennende Tropfen entzündet werden. V-2 erlaubt das Entflammen der Watte.

Die Prüfkriterien sind übersichtlich in der nachfolgenden Tabelle angegeben.

| Prüfkriterium | V-0 | V-1 | V-2 |
|---|---|---|---|
| Brenndauer, 1. Entflammen (1 St.) | ≤ 10 s | ≤ 30s | s 30 s |
| Brenn- u. Glühdauer, 2. Entflammen (1. St.) | ≤ 30 s | ≤ 60 s | ≤ 60 s |
| Gesamtbrenndauer, 1.+2. Entflammen (5 St.) | ≤ 50 s | ≤ 250 s | ≤ 250 s |
| Watte entzündet | Nein | Nein | Ja |

Der gemäß den Beispielen 3 und 4 hergestellten Prüfkörper erzielten jeweils das Ergebnis V-0.

## Patentansprüche

1. Halogenfreies, phosphorhaltiges Flammschutzmittel, erhältlich durch Umsetzen eines Phosphinsäurederivats aus der Gruppe von 9,10-Dihydro-9-oxa-10-phospha-phenanthren-10-oxid (DOPO) und kernsubstituierten DOPO-Derivaten mit einem wahlweise substituierten Polydien, das isolierte C-C-Doppelbindungen enthält, in Gegenwart eines Peroxids unter Addition des Phosphinsäurederivats an eine oder mehrere der isolierten C-C-Doppelbindungen.

2. Flammschutzmittel nach Anspruch 1, **dadurch gekennzeichnet, dass** das Phosphinsäurederivat der folgenden allgemeinen Formel (I) entspricht: 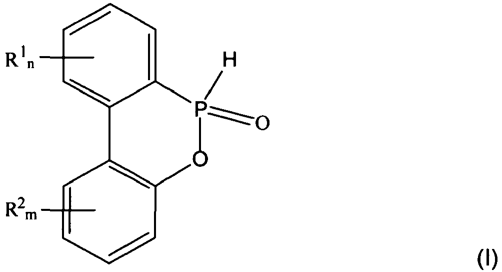 worin R¹ und R² gleich oder verschieden sind und jeweils unabhängig voneinander Alkyl, Alkoxy, Aryl, Aryloxy oder Aralkyl bedeuten, und n und m ganze Zahlen von 0 bis 4 sind.

3. Flammschutzmittel nach Anspruch 1 oder 2, **dadurch gekennzeichnet, dass** das Polydien aus der aus Polybutadien, Polyisopren, Naturkautschuk, Styrol-Butadien-Copolymer, Acrylnitril-Butadien-Copolymer und Etyhlen-Propylen-Dien-Terpolymer und deren Mischungen bestehenden Gruppe ausgewählt ist.

4. Flammschutzmittel nach einem der vorhergehenden Ansprüche, **dadurch gekennzeichnet, dass** das Polydien ein wahlweise substituiertes Polybutadien ist.

5. Flammschutzmittel nach einem der vorhergehenden Ansprüche, **dadurch gekennzeichnet, dass** das Polydien mit Hydroxy-Endgruppen substituiert ist.

6. Flammschutzmittel nach einem der vorhergehenden Ansprüche, **dadurch gekennzeichnet, dass** das Polydien ein mittleres Molekulargewicht Mₙ von 800 bis 10.000 g/mol aufweist.

7. Flammschutzmittel nach einem der vorhergehenden Ansprüche, **dadurch gekennzeichnet, dass** das Polydien ein mittleres Molekulargewicht Mₙ von 1.000 bis 5.000 g/mol aufweist.

8. Flammschutzmittel nach einem der vorhergehenden Ansprüche, **dadurch gekennzeichnet, dass** das Polydien eine Jodzahl von 20 bis 300 g Jod/100g aufweist.

9. Flammschutzmittel nach einem der vorhergehenden Ansprüche, **dadurch gekennzeichnet, dass** das Polydien ein wahlweise substituiertes Polybutadien mit einem Anteil an 1,2-Vinyl-Doppelbindungen von 20 bis 80 mol %, bezogen auf den Anteil an Polybutadiengrundeinheiten umfasst.

10. Flammschutzmittel nach einem der vorhergehenden Ansprüche, **gekennzeichnet durch** einen Phosphorgehalt von zwischen 2 und 11 Gew.-%.

11. Verfahren zur Herstellung eines halogenfreien, phosphorhaltigen Flammschutzmittels gemäß einem der vorhergehenden Ansprüche, **gekennzeichnet durch** Umsetzen eines Phosphinsäurederivats aus der Gruppe von 9,10-Dihydro-9-oxa-10-phospha-phenanthren-10-oxid (DOPO) und kernsubstituierten DOPO-Derivaten mit einem wahlweise substituierten Polydien, das isolierte C-C-Doppelbindungen enthält, in Gegenwart eines Peroxids unter Addition des Phosphinsäurederivats an eine oder mehrere der isolierten C-C-Doppelbindungen.

12. Verfahren nach Anspruch 11, **dadurch gekennzeichnet, dass** die Umsetzung bei einer Temperatur zwischen 130 und 160°C erfolgt.

13. Verfahren nach Anspruch 11 oder 12, **dadurch gekennzeichnet, dass** die Umsetzung lösungsmittelfrei erfolgt.

14. Verwendung des phosphorhaltigen Flammschutzmittels nach einem der Ansprüche 1 bis 10 zur flammhemmenden Ausrüstung von duroplastischen und thermoplastischen Formmassen und daraus hergestellten Formkörpern.

15. Polymerisierbare Zusammensetzung zur Herstellung einer thermoplastischen Formmasse mit 10 bis 40 Gew.-% des Flammschutzmittels nach einem der Ansprüche 1 bis 10; und 60 bis 90 Gew.-% wenigstens eines olefinisch ungesättigten Monomeren, Oligomeren oder Polymeren, jeweils bezogen auf die Gesamtmasse der polymerisierbaren Komponenten mit Flammschutzmittel, ohne Additive.

16. Härtbare duroplastische Formmasse mit 10 bis 40 Gew.-% des Flammschutzmittels nach einem der Ansprüche 1 bis 10, und 60 bis 90 Gew.-% wenigstens eines härtbaren duroplastischen Polymers aus der Gruppe der ungesättigten Polyesterharze, Epoxidharze, Polyurethane und Acrylate, jeweils bezogen auf die Gesamtmasse des duroplastischen Polymers mit Flammschutzmittel und Härter, ohne Additive.

## Claims

1. A halogen-free phosphorus-containing flame retardant, obtainable by reacting a phosphinic acid derivative from the group of 9,10-dihydro-9-oxa-10-phospha-phenanthrene-10-oxide (DOPO) and ring-substituted DOPO derivatives with an optionally substituted polydiene containing isolated C-C double bonds in the presence of a peroxide with the addition of the phosphinic acid derivative to one or more of the isolated C-C double bonds.

2. The flame retardant according to claim 1, **characterized in that** the phosphinic acid derivative corresponds to the following general formula (I): 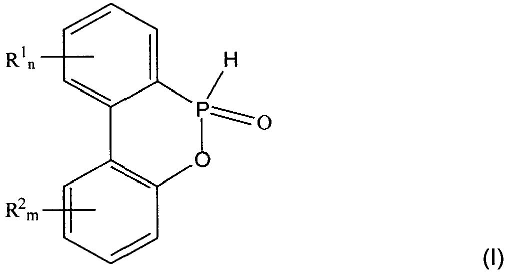 wherein R¹ and R² are identical or different and denote, each independently of each other, alkyl, alkoxy, aryl, aryloxy or aralkyl, and n and m are integers of from 0 to 4.

3. The flame retardant according to claim 1 or 2, **characterized in that** the polydiene is selected from the group consisting of polybutadiene, polyisoprene, natural rubber, styrene-butadiene copolymer, acrylonitrile-butadiene copolymer and ethylene propylene diene terpolymer and mixtures thereof.

4. The flame retardant according to any of the preceding claims, **characterized in that** the polydiene is an optionally substituted polybutadiene.

5. The flame retardant according to any of the preceding claims, **characterized in that** the polydiene is substituted with hydroxy terminal groups.

6. The flame retardant according to any of the preceding claims, **characterized in that** the polydiene has an average molecular weight Mₙ of from 800 to 10,000 g/mol.

7. The flame retardant according to any of the preceding claims, **characterized in that** the polydiene has an average molecular weight Mₙ of from 1,000 to 5,000 g/mol.

8. The flame retardant according to any of the preceding claims, **characterized in that** the polydiene has an iodine value of from 20 to 300 g iodine/100g.

9. The flame retardant according to any of the preceding claims, **characterized in that** the polydiene comprises an optionally substituted polybutadiene with a proportion of 1,2-vinyl double bonds of from 20 to 80 mol %, based on the proportion of polybutadiene repeating units.

10. The flame retardant according to any of the preceding claims, **characterized by** a phosphorus content of between 2 and 11% by weight.

11. A method of manufacturing a halogen-free, phosphorus-containing flame retardant according to any of the preceding claims, **characterized by** reacting a phosphinic acid derivative from the group of 9,10-dihydro-9-oxa-10-phosphaphenanthrene-10-oxide (DOPO) and ring-substituted DOPO derivatives with an optionally substituted polydiene containing isolated C-C double bonds, in the presence of a peroxide with the addition of the phosphinic acid derivative to one or more of the isolated C-C double bonds.

12. The method according to claim 11, **characterized in that** the reaction takes place at a temperature between 130 and 160°C.

13. The method according to claim 11 or 12, **characterized in that** the reaction takes place free of solvent.

14. Use of the phosphorus-containing flame retardant according to any of claims 1 to 10 for flame retardant finishing of thermosetting and thermoplastic molding compositions and molded pieces manufactured therefrom.

15. A polymerizable composition for manufacturing a thermoplastic molding composition having 10 to 40% by weight of the flame retardant according to any of claims 1 to 10; and 60 to 90% by weight of at least one olefinically unsaturated monomer, oligomer or polymer, each based on the total mass of the polymerizable components with flame retardant, without additives.

16. A curable thermosetting molding composition having 10 to 40% by weight of the flame retardant according to any of claims 1 to 10, and 60 to 90% by weight of at least one curable thermosetting polymer from the group of unsaturated polyester resins, epoxy resins, polyurethanes and acrylates, each based on the total mass of the thermosetting polymer with flame retardant and curing agent, without additives.

## Revendications

1. Agent ignifuge exempt d'halogène et contenant du phosphore, lequel peut être obtenu en faisant réagir un dérivé d'acide de phosphine du groupe de 9,10-dihydro-9-oxa-10-phospha-phénanthrène-10-oxyde (DOPO) ou des dérivés de DOPO substitués sur le noyau avec un polydiène substitué au choix contenant des liaisons doubles C-C isolées en présence d'un peroxyde avec addition du dérivé d'acide de phosphine à une ou plusieurs des liaisons doubles C-C isolées.

2. Agent ignifuge selon la revendication 1, **caractérisé en ce que** le dérivé d'acide de phosphine correspond à la formule générale (I) suivante : 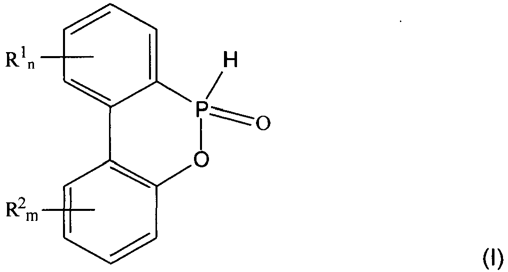 R¹ et R² étant identiques ou différents et représentant chacun, indépendamment l'un de l'autre, de l'alkyle, de l'alcoxyle, de l'aryle, de l'aryloxyle ou de l'aralkyle, et n et m étant des nombres entiers de 0 à 4.

3. Agent ignifuge selon la revendication 1 ou 2, **caractérisé en ce que** le polydiène est choisi parmi le groupe constitué de polybutadiène, de polyisoprène, de caoutchouc naturel, d'un copolymère styrène-butadiène, d'un copolymère acrylonitrile-butadiène et d'un terpolymère éthylène-propylène-diène et de leurs mélanges.

4. Agent ignifuge selon l'une des revendications précédentes, **caractérisé en ce que** le polydiène est un polybutadiène substituté au choix.

5. Agent ignifuge selon l'une des revendications précédentes, **caractérisé en ce que** le polydiène est substituté avec des groupes terminaux hydroxyle.

6. Agent ignifuge selon l'une des revendications précédentes, **caractérisé en ce que** le polydiène présente un poids moléculaire moyen Mₙ de 800 à 10.000 g/mol.

7. Agent ignifuge selon l'une des revendications précédentes, **caractérisé en ce que** le polydiène présente un poids moléculaire moyen Mₙ de 1.000 à 5.000 g/mol.

8. Agent ignifuge selon l'une des revendications précédentes, **caractérisé en ce que** le polydiène présente un indice d'iode de 20 à 300 g iode/100g.

9. Agent ignifuge selon l'une des revendications précédentes, **caractérisé en ce que** le polydiène comprend un polybutadiène substitué au choix avec une part de liaisons doubles 1,2-vinyle de 20 à 80 mol % par rapport à la part d'unités de base de polybutadiène.

10. Agent ignifuge selon l'une des revendications précédentes, **caractérisé par** une teneur en phosphore comprise entre 2 et 11 % en poids.

11. Procédé de fabrication d'un agent ignifuge exempt d'halogène et contenant du phosphore selon l'une des revendications précédentes, **caractérisé par** la réaction d'un dérivé d'acide de phosphine du groupe de 9,10-dihydro-9-oxa-10-phospha-phénanthrène-10-oxyde (DOPO) ou des dérivés de DOPO substitués sur le noyau avec un polydiène substitué au choix contenant des liaisons doubles C-C isolées en présence d'un peroxyde avec addition du dérivé d'acide de phosphine à une ou plusieurs des liaisons doubles C-C isolées.

12. Procédé selon la revendication 11, **caractérisé en ce que** la réaction est réalisée à une température comprise entre 130 et 160°C.

13. Procédé selon la revendication 11 ou 12, **caractérisé en ce que** la réaction est réalisée sans solvant.

14. Utilisation de l'agent ignifuge contenant du phosphore selon l'une des revendications 1 à 10 pour l'équipement ignifuge de matières moulables thermodurcissables et thermoplastiques et de corps moulés réalisés à partir de celles-ci.

15. Composition polymérisable pour la fabrication d'une masse moulable thermoplastique présentant de 10 à 40 % en poids de l'agent ignifuge selon l'une des revendications 1 à 10 et de 60 à 90 % en poids d'au moins un monomère, oligomère ou polymère oléfinique non saturé, chacun par rapport à la masse totale du composant polymérisable avec agent ignifuge, sans additifs.

16. Masse moulable thermodurcissable apte à être cuite présentant de 10 à 40 % en poids de l'agent ignifuge selon l'une des revendications 1 à 10 et de 60 à 90 % en poids d'au moins un polymère thermodurcissable apte à être cuit du groupe des résines polyester non saturées, des résines époxyde, des polyuréthanes et acrylates, chacun(e) par rapport à la masse totale du polymère thermodurcissable avec agent ignifuge et durcisseur, sans additifs.
